# EUROPÄISCHE PATENTSCHRIFT

(11) **EP 3 386 895 B1**
(45) Veröffentlichungstag und Bekanntmachung des Hinweises auf die Patenterteilung: **12.06.2019**
(21) Anmeldenummer: 16795060.9
(22) Anmeldetag: 14.11.2016
(51) Int. Cl.: B65G 47/84, B67C 3/22, F16B 7/04

(54) **BEHÄLTERTRANSPORTEUR MIT VERBINDUNGSELEMENTE**
CONTAINER CONVEYOR COMPRISING CONNECTING ELEMENTS
TRANSPORTEUR DE RÉCIPIENTS COMPORTANT DES ÉLÉMENTS DE LIAISON

(30) Priorität: 10.12.2015 DE 102015121530
(43) Veröffentlichungstag der Anmeldung: 17.10.2018
(73) Patentinhaber: KHS GmbH, 44143 Dortmund (DE)
(72) Erfinder: BEISEL, Michael, 55444 Schöneberg (DE); KRAUTH, Marcus, 55452 Windesheim (DE)
(86) Internationale Anmeldenummer: PCT/EP2016/077554
(87) Internationale Veröffentlichungsnummer: WO 2017/097538

(56) Entgegenhaltungen:
- WO-A1-2010/009767
- WO-A1-2010/013263
- WO-A1-2011/010331
- WO-A1-2011/161704
- DE-A1-102011 083 973
- DE-U1-202005 002 470

## Beschreibung

Die Erfindung bezieht sich auf einen Behältertransporteur gemäß Oberbegriff Patentanspruch 1. Derartige Behältertransporteure bilden beispielsweise den Vortisch, den Behältereinlauf oder den Behälterauslauf einer Behälterbehandlungsmaschine, mit deren Maschinengestell das säulen- oder rohrartige Transportelementgehäuse des wenigstens einen Transportelementes des Behältertransporteurs über das wenigstens eine Verbindungselement mechanisch verbunden ist, oder aber der jeweilige Behältertransporteur bildet eine Behältertransportstrecke vorzugsweise mit wenigstens zwei, bevorzugt aber mit mehr als zwei Transportelementen, die in einer Behältertransportrichtung aneinander anschließen und deren wiederum säulen- oder rohrartigen Transportelementgehäuse jeweils durch wenigstens ein Verbindungselement mechanisch zu einer Transportelementkombination, d.h. zu der Behältertransportstrecke verbunden sind.

Das jeweilige Transportelement ist bevorzugt für einen bodenneutralen, d.h. hängenden Transport der Behälter ausgebildet und weist am Umfang eines um eine vertikale Maschinenachse umlaufend antreibbaren sternradartigen Rotors oder Transportrades eine Vielzahl von Behälteraufnahmen, beispielsweise in Form von Greifern, Klammern usw. auf, und zwar für die hängende Halterung der Behälter, insbesondere der als Flaschen ausgebildeten Behälter an einem Flansch (Neck-Ring), der am Flaschenhals angeformt ist.

Behältertransportstrecken, die aus einer Vielzahl von in einer Behältertransportrichtung aneinander anschließenden Transportsternen oder Transportelementen bestehen und bei denen die umlaufend antreibbaren sternradartigen Transporträder auch unterschiedlichen Durchmesser aufweisen können, dienen in der Regel zu einem bodenneutralen und hängenden Transport der Behälter zwischen Behälterbehandlungsmaschinen oder Aggregaten einer Behälterbehandlungsanlage. Neben einer präzisen Ausrichtung der die Behälter tragenden, führenden und transportierenden Elemente steht besonders auch die Forderung nach einer möglichst einfachen Zugänglichkeit der Behältertransportstrecke für Reinigungs- und/oder Reparatur- und/oder Inspektionszwecke im Vordergrund. Bekannte Behältertransportstrecken bestehen in der Regel aus vertikal orientierten Rohrelementen oder Rohrstücken, die die säulen- oder rohrartigen Transportelementgehäuse bilden, und aus Verbindungselementen, die von den Transportelementgehäusen seitlich wegstehen und diese miteinander verbinden. Die Verbindungselemente sind dann beispielsweise in Rohrform ausgeführt und an den vertikalen säulen- oder rohrartigen Transportelementgehäusen angeschweißt oder mit angeschweißten und bearbeiteten Endflanschen versehen, die das Verbinden der einzelnen Transportelemente durch Verschrauben ermöglichen. Diese Herstellung ist sehr aufwendig, da neben Vorverarbeitungsschritten bei der Vorfertigung der verschiedenen Komponenten u.a. auch Schweißarbeiten notwendig sind und vielfach eine zusätzliche Bearbeitung insbesondere von Anschlussflächen durch Drehen und/oder Fräsen erfolgen muss. Zudem sind die vielen Anschlüsse oder Trennstellen, ohne die der Transport der Komponenten einer Behältertransportstrecke an den Verwendungsort nicht möglich ist und die bei der Montage am Verwendungsort miteinander verbunden werden müssen, teuer.

In den von den vertikalen Rohrelementen gebildeten Transportelementgehäusen sind im oberen Bereich die Antriebe der Motoren oder Sternräder eingesetzt. Im unteren Bereich der vertikalen Rohrelemente sind Abstützungen oder Standfüße für die Bodenbefestigung der Behältertransportstrecke angebracht. Zwischen den Transportelementen müssen unterschiedliche Distanzen und Winkelstellungen möglich sein. Weiterhin wird in der Regel auch gefordert, sämtliche Steuer- und Last- oder Versorgungsleitungen der Antriebe räumlich getrennt innerhalb der Verbindungselemente anzuordnen, und zwar zum Schutz gegen Flüssigkeiten, wie beispielsweise gegen Reinigungsmittel, sowie zum Schutz gegen mechanische Beschädigungen, insbesondere durch Bruchstücke, auch aus Glas usw. Diese Maßnahmen sind bei den bekannten Ausführungen von Behältertransportstrecken wegen der geschlossenen Bauform aber nur schwer oder aber nur durch bauliche Maßnahmen realisierbar, die dann ungünstig zu reinigende Bauteile außerhalb der Transportelementgehäuse erfordern.

Speziell sind Behältertransporteure der vorstehend genannten Art in Form von Vortischsystemen mit jeweils mehreren in einer Behältertransportrichtung aufeinander folgenden oder aneinander anschließenden Transportsternen für einen bodenneutralen und hängenden Transport von Behältern (DE 10 2011 083 973 A1). Die von vertikalen Rohrstücken oder Rohrelementen gebildeten Transportelementgehäuse benachbarter Transportelemente sind durch die rohrförmigen horizontalen Verbindungselemente miteinander mechanisch verbunden. Jedes Verbindungselement ist beidendig mit einem Endstück versehen, mit dem es durch Verschrauben an dem betreffenden Transportelementgehäuse befestigt ist, und zwar an einem kugelförmig ausgebildeten Anschlussbereich des Transportelementgehäuses. Die Endstücke sind mit einer an diese Kugelform angepassten konkaven kugelkalottenförmigen Anschlussfläche versehen, so dass allein durch die Form der Anschlussbereiche und der Endstücke eine eindeutige Ausrichtung des jeweiligen Verbindungselementes in Bezug auf das jeweilige Transportelementgehäuse nicht gegeben ist. Zusätzlich bedingte Freiheitsgrade, die sich durch die Ausbildung der Anschlüsse oder Trennstellen ergeben, erhöhen den Mehraufwand bei der Montage, insbesondere aber auch bei der für einen einwandfreien Behältertransport notwendigen Ausrichtung und Einstellung der Komponenten der jeweiligen Behältertransportstrecke. So ist u.a. trotz enger Fertigungstoleranzen die endgültige Montage einer solchen aus mehreren Transportelementen bestehenden Behältertransportstrecke ohne Ausgleichselemente (Ausgleichs- und/oder Beilegebleche) nicht oder kaum möglich.

Nachteilig ist auch hier u.a. die sehr aufwendige Herstellung sowohl der Transportelementgehäuse, als auch der Verbindungselemente und deren Endstücke, zumal zusätzlich zu den Vorbearbeitungsschritten bei der Herstellung der Fertigungskomponenten, wie u.a. Drehen und/oder Fräsen, auch Schweißarbeiten erforderlich sind und auch eine Endbearbeitung der Flansche durch Drehen und/oder Fräsen erforderlich ist. Das Verschrauben der Verbindungselemente von der Innenseite der säulen- oder rohrartigen Transportelementgehäuse ist umständlich und zeitraubend.

Bekannt sind weiterhin Behälterbehandlungsmaschinen mit jeweils einem Vortisch (EP 1 645 537 B1), wobei der Vortisch im Wesentlichen aus stabförmigen Verbindungselementen besteht, die Aufnahmen für transportsternartige Transportelemente bilden und beispielsweise auch zwei oder mehrere Behälterbehandlungsmaschinen einer Behälterbehandlungsanlage miteinander verbinden.

Aufgabe der Erfindung ist es, einen Behältertransporteur aufzuzeigen, der wenigstens ein transportsternartiges Transportelement, bevorzugt aber wenigstens zwei in einer Behältertransportrichtung aufeinanderfolgende und aneinander anschließende Transportelemente aufweist und bei dem an dem säulen- oder rohrartigen Transportelementgehäuse des wenigstens einen Transportelementes ein rohrartiges und von diesem Gehäuse wegstehendes Verbindungselement für eine mechanische Verbindung mit einer Behälterbehandlungsmaschine oder mit einem säulen- oder rohrartigen Gehäuse eines weiteren Transportelementes befestigt ist, wobei die Verbindung (Rohrverbindung) oder der mechanische Anschluss zwischen dem jeweiligen Transportelementgehäuse und dem Verbindungselement mit geringem konstruktiven und montagetechnischen Aufwand realisierbar ist.

Zur Lösung dieser Aufgabe ist ein Behältertransporteur entsprechend dem Patentanspruch 1 ausgebildet.

Bei der Erfindung ist die Verbindung zwischen dem jeweiligen Verbindungselement und dem säulen- oder rohrartigen Transportelementgehäuse durch Verspannen oder Klemmen realisiert. Hierdurch kann insbesondere auch ohne aufwändige, geschweißte und/oder bearbeitete Anschlüsse, Verbindungsflansche oder Zwischenverbindungen usw. der beispielsweise auch aus mehreren Transportelementen bestehende Behältertransporteur in der erforderlichen Geometrie realisiert werden. Die Transportelemente sind bei der Erfindung bevorzugt als Transportsterne für einen bodenneutralen und hängenden Transport der Behälter ausgebildet.

Die Montage des erfindungsgemäßen Behältertransporteurs wird durch den Wegfall von Zwischenverbindungen stark vereinfacht und ist selbsterklärend. Die in vertikaler Richtung orientierten säulen- oder rohrartigen Transportelementgehäuse, in denen wiederum die Antriebe und Lager für die die Behälteraufnahmen aufweisenden Transporträder vorgesehen sind, werden zur Realisierung des jeweiligen Anschlusses oder der jeweiligen Rohrverbindung seitlich in die Ausnehmungen, die an den rohrförmigen Verbindungselementen vorgesehen sind, eingelegt und anschließend mit dem jeweiligen Verbindungselement verschraubt oder verspannt, und zwar so, dass das jeweilige Verbindungselement zumindest im Bereich des jeweiligen Anschlusses mit seiner Längserstreckung tangential oder im Wesentlichen tangential zu einer gedachten Kreislinie, die die Achse des säulen- oder rohrartigen Transportelementgehäuses umschließt, oder aber tangential oder im Wesentlichen tangential zur Umfangsfläche dieses Transportelementgehäuses orientiert ist.

Bevorzugt erfolgt das Verspannen des Verbindungselementes an dem jeweiligen Transportelementgehäuse unter Verwendung eines Spannbügels, der dann das Transportelementgehäuse an dem Teil seines Umfangs, der von der betreffenden Ausnehmung des Verbindungselementes nicht aufgenommenen ist, umgreift.

Zur Stabilisierung des jeweiligen Verbindungselementes sind in diesem bevorzugt beidseitig von der jeweiligen, das säulen- oder rohrartige Transportelementgehäuse aufnehmenden Ausnehmung Distanzstücke vorgesehen, die beim Verschrauben bzw. Verspannen ein Einziehen oder Einknicken des rohrartigen Verbindungselementes verhindern.

Die exakte Ausrichtung des Verbindungselementes in Bezug auf das jeweilige Transportelementgehäuse erfolgt bevorzugt durch Stiftzuweisung, d.h. durch jeweils wenigstens einen in eine Zentrieröffnung eingreifenden Zentrierstift, wobei dieser Zentrierstift z.B. an dem Spannbügel und die Zentrieröffnung in dem Transportelementgehäuse oder aber umgekehrt der Zentrierstift an dem Transportelementgehäuse und die Zentrieröffnung am Spannbügel vorgesehen sind.

Zur Abdichtung des Anschlusses, d.h. zur Abdichtung des Übergangs zwischen dem Verbindungselement und dem Transportelementgehäuse, aber auch zur Abdichtung der im Transportelementgehäuse vorgesehenen Zentrieröffnung sind Dichtungen vorgesehen. Diese sind beispielsweise speziell geformte Dichtungen oder aber Dichtungen, die von einem beispielsweise band- oder bahnförmigen Dichtungsmaterial abgetrennt wurden. Die im Bereich der Stiftzuweisung vorgesehen Dichtung wird erst bei der Montage von dem dortigen Zentrierstift perforiert. Eine vorbereitete Öffnung für den Zentrierstift ist nicht erforderlich.

Das jeweilige rohrförmige Verbindungselement dient bevorzugt auch zur geschützten Aufnahme von Leitungen, insbesondere von Steuer- und/oder Versorgungsleitungen, beispielsweise auch zur Aufnahme von Leitungen für Kühl-, Schmier- und/oder Druckmedien und/oder zur Aufnahme von elektrischen Versorgungs- und Steuerleitungen oder -kabeln. Diese Leitungen sind dann bevorzugt räumlich getrennt innerhalb des Verbindungselementes geführt und reichen durch wenigstens eine am jeweiligen Anschluss vorgesehene Öffnung auch in das Transportelementgehäuse.

An den Rohrverbindungen oder Anschlüssen sind an den Verbindungselementen vorzugsweise Nasen angeformt oder angelasert, deren Zweck eine zusätzliche metallische Anlage und damit eine zusätzliche Form- und Lagefixierung des Verbindungselementes an dem betreffenden Transportelementgehäuse ist.

Die Enden des jeweiligen rohrförmigen Verbindungselementes sind bevorzugt durch aufgesteckte Kappen, die Dichtungen tragen, verschlossen. Diese Kappen können jederzeit entfernt werden, um so die Zugänglichkeit in das Innere des Verbindungselementes beispielsweise für Inspektionszwecke und/oder zum Verlegen von weiteren Leitungen oder Kabeln zu ermöglichen. Auch für dieses Verschließen der Verbindungselemente sind keine Schrauben oder Flansche notwendig.

An den unteren Enden der säulenartigen Transportelementgehäuse ist jeweils der mit einem Abschlussdeckel versehene Stützfuß des Transportelementes eingesteckt und dort z.B. durch einen O-Ring fixiert. Im Betriebszustand des Transportelementes treten keinerlei Kräfte auf und Flüssigkeiten laufen ungehindert ab. In das obere Ende des säulen- oder rohrartigen Transportelementgehäuses ist der jeweilige Antrieb über einen Flansch eingesetzt und seitlich durch Schrauben gesichert.

Die Transportelementgehäuse, die Verbindungselemente sowie die für jeweilige die Spann- oder Klemmverbindung erforderlichen Elemente sind aus einem geeigneten metallischen Material, vorzugsweise aus einem korrosionsbeständigen Stahl gefertigt. Die wesentlichen Vorteile des erfindungsgemäßen Behältertransporteurs sind u.a.:
- sehr kostengünstige Fertigungsteile, insbesondere durch die Verwendung von Rohrelementen für die Transportelementgehäuse und die Verbindungselemente
- vereinfachte Montage
- Reduktion von Montagefehlern
- durch die jeweilige Rohrverbindung bereits vorgegebene Orientierung jedes Verbindungselementes in Bezug auf das Transportelementgehäuse
- geschützte Aufnahme von Versorgungs- und/oder Steuerleitungen, auch von Medienleitungen zum Transport von Flüssigkeiten innerhalb des wenigstens einen Verbindungselementes und des wenigstens einen Transportelementgehäuses,
- leicht zu reinigende Oberflächen,
- gute Zugänglichkeit für Reinigungs-, Inspektions- und/oder Reparaturzwecke,
- metallische Anlage, auch im Bereich der Stiftzuweisungen, für präzise Bauteilausrichtung,
- geeignet insbesondere auch als Behältertransportsysteme oder Behältertransporteure für einen bodenneutralen Behältertransport,
- hohe Fertigungsqualität durch den Einsatz von Rohrlasermaschinen an den vertikalen, die Transportelementgehäuse bildenden Rohren sowie an den horizontalen, die Verbindungselemente bildenden Rohren,
- der Anschlusswinkel der Verbindungselemente um die vertikale Achse ist variabel,
- verkürzte Herstellungszeiten,
- einfache Austauschbarkeit von Dichtungen,
- Vermeidung von außen verlegten Leitungen.

Weiterhin ermöglicht die Erfindung eine flexible Konstruktionsanpassung, durch die Entwicklungszeiten für artverwandte Geometrien von Behältertransporteuren oder Behältertransportstrecken eingespart werden.

"Behälterbehandlungsmaschinen oder -aggregate" sind im Sinne der Erfindung insbesondere solche zum Reinigen, Desinfizieren, Füllen, Verschließen, Etikettieren, Bedrucken von Behälter, aber auch Maschinen oder Aggregate zum Herstellen der Behälter in Form von Flaschen aus Kunststoff, vorzugsweise aus PET, insbesondere durch Blasen oder Streckformen.

"Behälterbehandlungsanlagen" sind im Sinne der Erfindung insbesondere Anlagen, die wenigsten eine Behälterbehandlungsmaschinen oder wenigstens ein Behälterbehandlungsaggregat aufweisen.

"Behälter" sind im Sinne der Erfindung insbesondere Dosen, Flaschen, Tuben, Pourches, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind.

"Zylindrische Außen- oder Mantelfläche" bedeutet im Sinne der Erfindung, dass das Transportelementgehäuses bei zumindest im Bereich der Rohrverbindung oder des Anschlusses mit dem Verbindungselement entlang seiner Achse einen konstanten oder im Wesentlichen konstanten Außendurchmesser aufweist und dort eine konvexe Außen- oder Mantelfläche bildet, bevorzugt kreiszylinderförmig oder im Wesentlichen kreiszylinderförmig ausgebildet ist.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an einem Ausführungsbeispiel näher erläutert. Es zeigen:

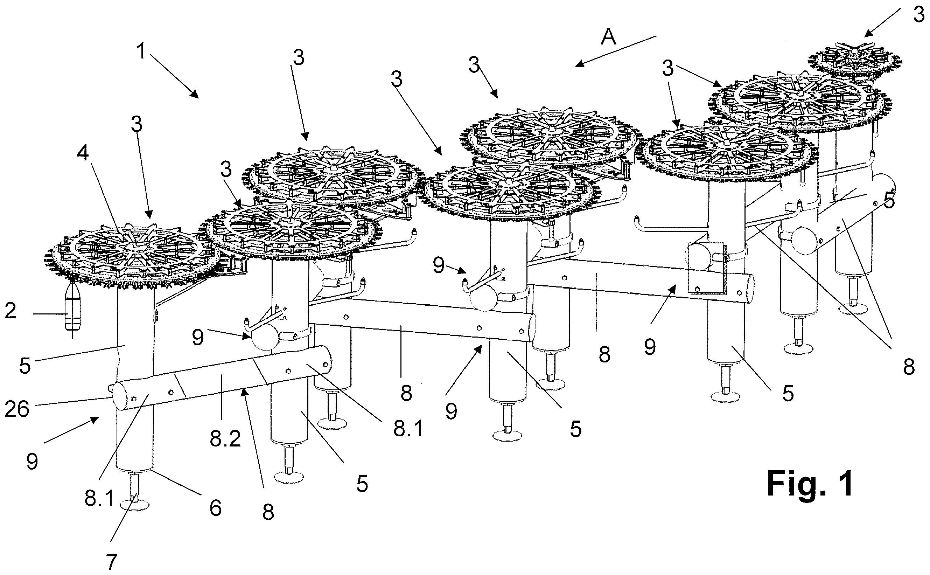

- Fig. 1: in perspektivischer Darstellung einen Behältertransporteur in Form einer Behältertransportstrecke für einen bodenneutralen und hängenden Transport von Behältern in Form von Flaschen;
- Fig. 2 in: perspektivischer Darstellung den Anschluss zwischen einem Transportelementgehäuse und zwei als horizontale Rohrstücke oder Rohrelemente ausgebildeten Verbindungselementen;
- Fig. 3 und 4: den Anschluss der Fig. 2 in unterschiedlichen Blickrichtungen, wobei das Transportelementgehäuse sowie auch ein Verbindungselement geschnitten dargestellt sind;
- Fig. 5: in vergrößerter Darstellung ein Detail der Figur 4;
- Fig. 6: in vergrößerter Teildarstellung den Verbindungsanschluss zusammen mit einer Dichtung zum Abdichten des Übergangs zwischen dem jeweiligen Transportelementgehäuse und dem jeweiligen Verbindungselement;
- Fig. 7: in perspektivischer Darstellung die Transportelementgehäuse zweier benachbarter Transportsterne oder Transportelemente zusammen mit einer Trenneinlage;

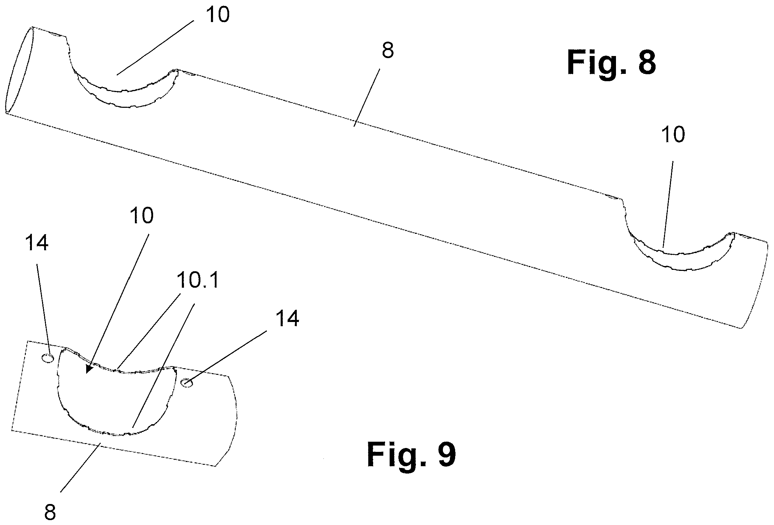

- Fig. 8: in perspektivischer Einzeldarstellung ein Verbindungselement der Behältertransportstrecke der Fig. 1;
- Fig. 9: in vergrößerter perspektivischer Darstellung ein Ende des rohrförmigen Verbindungselementes der Fig. 8;
- Fig. 10 und 11: Dichtungen zur Verwendung an dem jeweiligen Anschluss der der Behältertransportstrecke der Fig. 1.

In den Figuren ist 1 ein Behältertransporteur in Form einer Behältertransportstrecke zum bodenneutralen, d.h. zum hängenden Transport von Behältern 2, beispielsweise in Form von Flaschen, bevorzugt von solchen aus Kunststoff, vorzugsweise aus PET (Polyethylenterephthalat).

Der Behältertransporteur 1 besteht aus mehreren Transportsternen oder Transportelementen 3, die in einer Behältertransportrichtung (Pfeil A) aneinander anschließen, in der die Behälter 2 durch die Behältertransportstrecke bewegt werden, und zwar beispielsweise zwischen Maschinen oder Aggregaten einer Behälterbehandlungsanlage. Die einzelnen Transportelemente 3 bestehen in bekannter Weise jeweils aus einem um eine vertikale oder im Wesentlichen vertikale Maschinenachse umlaufend antreibbaren Rotor oder Transportrad 4 mit einer Vielzahl von Behälteraufnahmen am Radumfang, an denen die Behälter 2 hängend gehalten sind, beispielsweise an einem am Behälter- oder Flaschenhals ausgebildeten Flansch (Neck-Ring). Jedes Transportelement 3 besitzt ein eigenes Transportelementgehäuse 5, welches säulen- oder rohrstückartig, d.h. als Rohrstück oder Rohrelement mit zumindest kreiszylinderförmiger Außen- oder Mantelfläche und mit vertikal orientierter Achse (Vertikalrohr) achsgleich mit der Maschinenachse des Transportelementes 3 ausgebildet ist und in welchem das zugehörige Transportrad 4 gelagert ist sowie auch ein elektromotorischer Antrieb für das Transportrad 4 vorgesehen ist. Die Anordnung der Transportelemente 3 und die Antriebe dieser Transportelemente sind so ausgebildet, dass die Behälter 2 jeweils an den Übergabebereichen zwischen zwei in Behältertransportrichtung aufeinanderfolgenden Transportelementen 3 von dem Transportrad 4 eines Transportelementes an das Transportrad 4 des nachfolgenden Transportelementes 3 weitergegeben werden.

Am unteren Ende sind die von den Vertikalrohren gebildeten Transportelementgehäuse 5 jeweils durch einen Deckel 6 unter Verwendung einer Dichtung dicht verschlossen. An jedem Deckel 6 ist ein über das Transportelementgehäuse 5 nach unten wegstehender Standfuß 7 beispielsweise höhenverstellbar vorgesehen.

Die Transportelementgehäuse 5 bzw. die diese Gehäuse bildenden Vertikalrohre benachbarter Transportelemente 3 sind durch ein ebenfalls als Rohrstück oder Rohrelement ausgebildetes Verbindungselement 8 miteinander verbunden, und zwar an Anschlüssen 9 derart, dass die Transportelementgehäuse 5 zusammen mit den sich vorzugsweise in horizontaler oder im Wesentlichen in horizontaler Richtung erstreckenden Verbindungselementen 8 bzw. mit den diese Verbindungselemente 8 bildenden Horizontalrohren eine standfeste Rohrkonstruktion bilden. Dies ist u.a. auch dadurch erreicht, dass die Längsachsen zweier an einem Transportelementgehäuse 5 befestigter Verbindungselemente 8 jeweils einen Winkel miteinander einschließen, d.h. die Transportelementgehäuse 5 nicht nur in der durch den Pfeil A angedeuteten Achsrichtung, sondern auch quer hierzu in horizontaler Richtung gegeneinander versetzt sind.

Eine Besonderheit besteht darin, dass die Verbindungselemente 8 zumindest im Bereich der Anschlüsse 9. d.h. zumindest mit ihren dortigen Enden jeweils tangential oder im Wesentlichen tangential an das betreffende Transportelementgehäuse 5 anschließen und dort durch eine Klemm- oder Spannverbindung mit dem Transportelementgehäuse 5 verbunden sind. Ist ein Transportelementgehäuse 5 mit zwei unterschiedlichen Verbindungselementen 8 verbunden, so sind die entsprechenden Anschlüsse 9 in Richtung der vertikalen Maschinenachse bzw. in Richtung der Achse des betreffenden Transportelementgehäuses 5 gegeneinander versetzt.

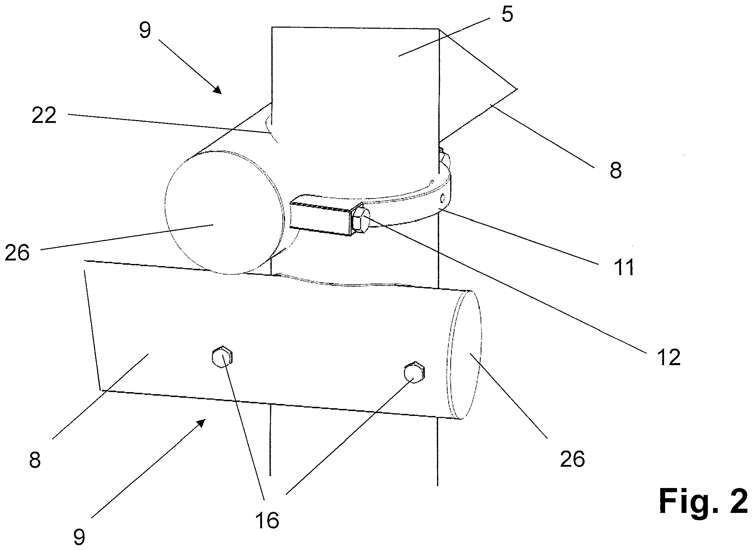

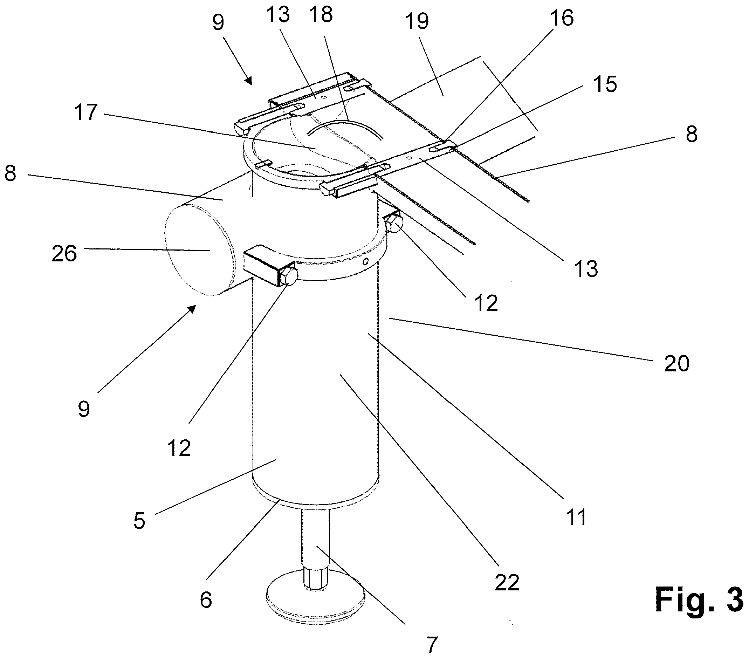

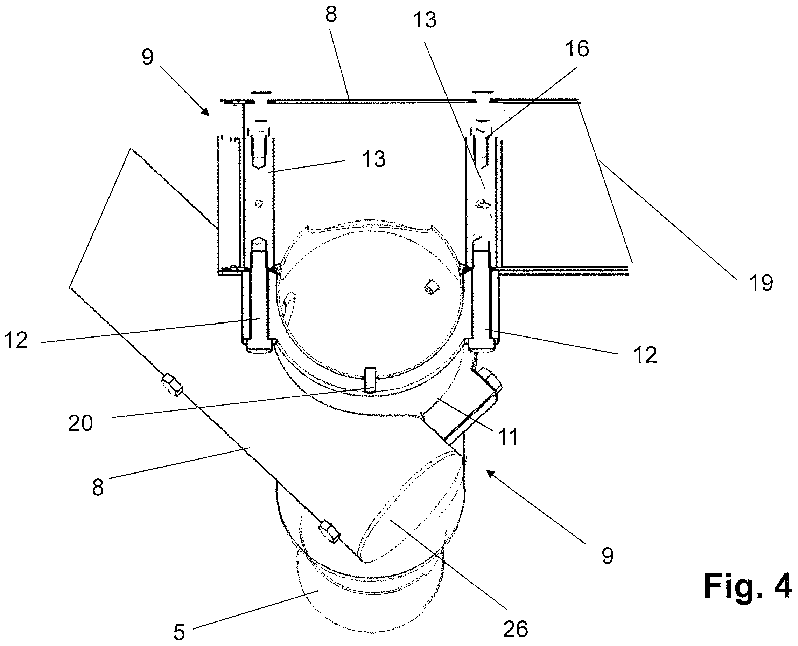

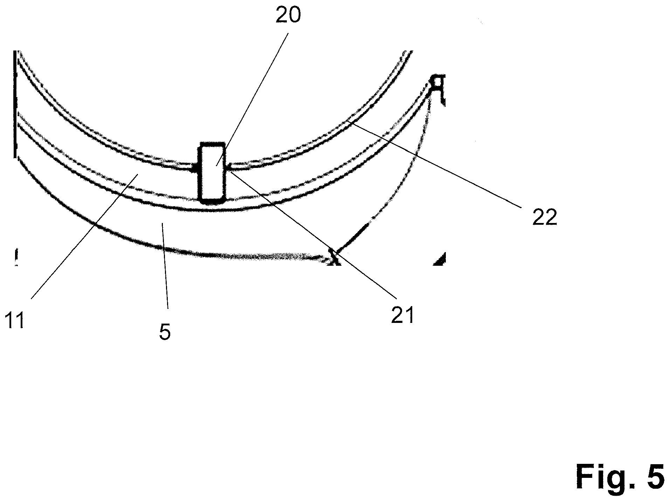

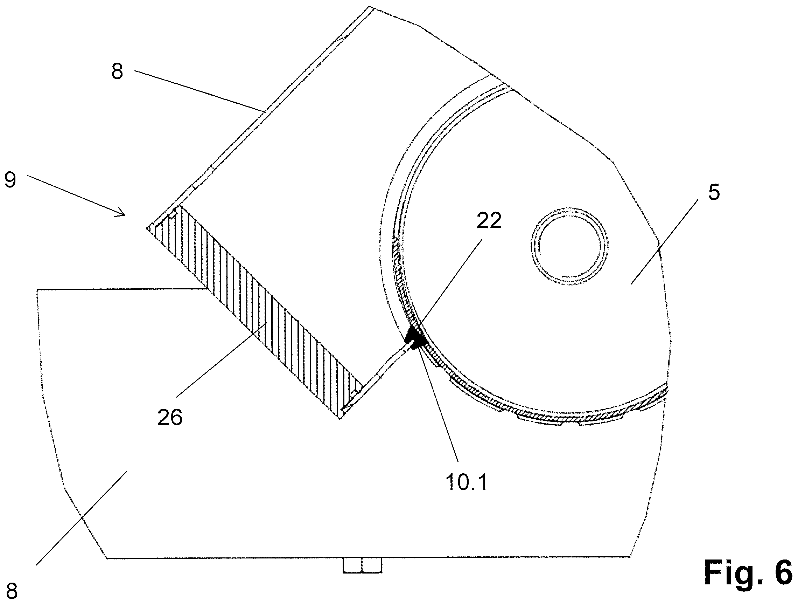

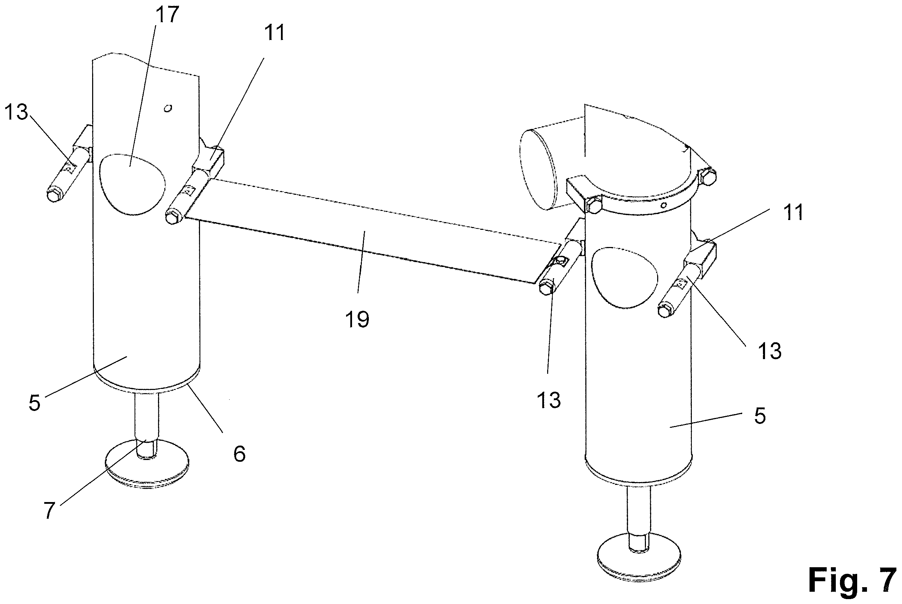

Die Fig. 2 - 7 zeigen die Rohrverbindungen, d.h. die Anschlüsse 9 näher im Detail. Für diese Anschlüsse 9 sind die Verbindungselemente 8 an ihren Enden mit jeweils einer vorzugsweise durch Lasern hergestellten Ausnehmung 10 versehen, die so geformt ist, dass nach dem seitlichen Aufsetzen eines Verbindungselementes 8 auf ein Transportelementgehäuse 5 dieses Verbindungselement mit seiner Längserstreckung nicht nur tangential oder im Wesentlichen tangential zum Transportelementgehäuse 5 orientiert ist, sondern dieses Gehäuse auf einem Teil seines Umfangs, d.h. bevorzugt auf einem Winkelbereich kleiner als 180° passend in der Ausnehmung 10 aufgenommen ist. Hierfür sind bei Verbindungselementen 8 mit kreiszylinderförmiger Außen- oder Mantelfläche die Ausnehmungen 10 jeweils mit zwei teilkreisförmigen konkaven Randbereichen 10.1 ausgeführt, deren Radius gleich oder im Wesentlichen gleich dem Krümmungsradius ist, den die Mantelfläche der Transportelementgehäuse 5 am jeweiligen Anschluss 9 aufweist.

Die endgültige mechanische Verbindung zwischen dem Verbindungselement 8 und dem jeweiligen Transportelementgehäuse 5 erfolgt durch Klemmen oder Verspannen, d.h. bei der dargestellten Ausführungsform durch einen Spannbügel 11, der das betreffende Transportelementgehäuse 5 an der dem Verbindungselement 8 abgewandten Seite umgreift, und unter Verwendung von zwei Spannschrauben 12, von denen jeweils eine an einem Bügelende vorgesehen ist und in ein Gewinde eines Distanzstückes 13 eingreift. Die beispielsweise bolzenartigen Distanzstücke 13 befinden sich im Inneren des jeweiligen Verbindungselementes 8 beidseitig der Ausnehmung 10, d.h. in Richtung der Längserstreckung des Verbindungselementes 8 gegeneinander versetzt und sind mit ihren Achsen quer oder senkrecht zur Längserstreckung des rohrförmigen Verbindungselementes 8 orientiert. Für den Durchtritt der Spannschrauben 12 sind in dem Verbindungselement 8 beidseitig in der jeweiligen Ausnehmung 10 und in Richtung der Längserstreckung des Verbindungselementes 8 gegeneinander versetzt Öffnungen 14 vorgesehen. Diesen Öffnungen gegenüberliegend sind im Verbindungselement 8 weiterhin zwei Öffnungen 15 vorgesehen, und zwar für Schrauben 16, mit denen die Distanzstücke 13 mit ihren den Spannschrauben 12 entfernt liegenden Enden mit dem Verbindungselement 8 verbunden sind.

Wie insbesondere die Figuren zeigen, sind die Transportelementgehäuse 5 im Bereich der Rohrverbindungen oder Anschlüsse 9 jeweils mit einer Öffnung 17 versehen, über die eine Verbindung zwischen dem Inneren des Transportelementgehäuses 5 und dem anschließenden Verbindungselement 8 besteht, so dass Leitungen 18 für unterschiedliche Medien, beispielsweise auch für den Antrieb und/oder die Steuerung, z.B. elektrische Versorgungs- und Steuerleitungen usw. nach außen hin vollständig geschützt und abgedeckt über die Verbindungselemente 8 an die einzelnen Transportelemente 3 geführt werden können.

Sofern eine Trennung zwischen unterschiedlichen Leitungen 18 erforderlich ist, besteht auch die Möglichkeit, innerhalb der Verbindungselemente 8 jeweils eine plattenförmige, z.B. aus einem Flachmaterial hergestellte Trenneinlage 19 vorzusehen, die an ihren Enden an den Distanzstücken 13 der beiden Anschlüsse 9 des Verbindungselementes 8 gehalten ist.

Um eine möglichst genaue Orientierung des jeweiligen mit einem Transportelementgehäuse 5 verbundenen Verbindungselementes 8 am betreffenden Anschluss 9 zu erreichen, ist jedes Transportelementgehäuse 5 der Öffnung 17 gegenüberliegend mit einem Zentrierzapfen 20 versehen, der in eine im Spannbügel 11 ausgebildete Zentrieröffnung 21 eingreift und beispielsweise durch Laserschweißen befestigt ist, oder aber der Zentrierzapfen 20 ist am Spannbügel und die Zentrieröffnung 21 ist am Transportelementgehäuse 5 vorgesehen.

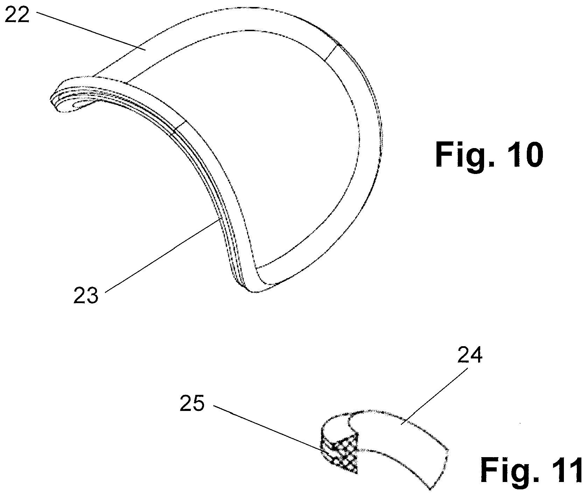

Durch entsprechende Dichtungen ist das Eindringen von Fremdstoffen, insbesondere auch von Flüssigkeiten, wie beispielsweise von Reinigungs- und/oder Desinfektionsmitteln an den Anschlüssen 9 in das Innere der Transportelementgehäuse 5 und der Verbindungselemente 8 verhindert. Die Fig. 10 zeigt die Dichtung 22, die zum Abdichten des Übergangs zwischen dem jeweiligen Transportelementgehäuse 5 und dem jeweiligen Verbindungselement 8 im Bereich der Ausnehmung 10 dient. Die Dichtung 22 ist an einer Seite mit einer Nut 23 geformt, mit der die Dichtung 22 auf den Rand 10.1 der Ausnehmung 10 aufgesetzt werden kann, so dass nach dem Verspannen des Verbindungselementes 8 mit dem betreffenden Transportelementgehäuse 5 die der Nut gegenüberliegende Seite der Dichtung 22 angepresst gegen die Außenfläche des Transportelementgehäuses 5 und die Bodenfläche der Nut 23 angepresst gegen den Rand der Ausnehmung 10 anliegt.

Zur Abdichtung des Anschlusses 9 im Bereich des Zentrierstiftes 20 und der Zentrieröffnung 21 dient die in der Fig. 11 dargestellte Dichtung 24, die an die Form des Spannbügels 11 angepasst teilringförmig ausgebildet ist und an ihrer Außenseite eine Nut 25 zur Aufnahme des Spannbügels 11 aufweist. Nach dem Verspannen des betreffenden Verbindungselementes 8 mit einem Transportelementgehäuse 5 liegt dann die Dichtung 24 mit ihrer konkaven Innenseite gegen die Außenseite des Transportelementgehäuses 5 und mit dem Boden der Nut 25 gegen die konkave Innenseite des Spannbügels 11 angepresst an. Bei der Montage wird die Dichtung 24 automatisch von dem sich in die Zentrieröffnung 21 hineinbewegenden Zentrierstift 20 perforiert, so dass es nicht erforderlich ist, bereits bei der Herstellung der Dichtung 24 für den Durchtritt des Zentrierstiftes 20 eine besondere Öffnung vorzusehen.

An ihren Enden sind die Verbindungselemente 8 bzw. die diese Verbindungselemente bildenden Horizontalrohre jeweils durch einen Deckel 26 unter Verwendung eines Dichtungsrings dicht verschlossen. Die Deckel 26 sind beispielsweise Formteile aus Metall, bevorzugt aus Kunststoff, die dann beispielsweise durch Aufstecken und Verrasten oder Verklemmen an den Enden der Verbindungselemente 8 gehalten sind.

Die Erfindung wurde voranstehend an einem Ausführungsbeispiel beschrieben. Es versteht sich, dass zahlreiche Änderungen oder Abwandlungen möglich sind, ohne dass dadurch der der Erfindung zugrundeliegende Erfindungsgedanke verlassen wird. So wurde vorstehend davon ausgegangen, dass die Verbindungselemente 8 von einem Rohrstück gebildet sind, das sich zwischen den Transportelementgehäusen 5 benachbarter Transportelemente 3 erstreckt. Grundsätzlich besteht aber auch die Möglichkeit, die Verbindungselemente 8 mehrteilig auszuführen, und zwar beispielsweise in der Form, dass jedes Verbindungselement 8 dreiteilig ausgeführt ist, und zwar mit zwei rohrförmigen Endstücken 8.1, die jeweils die Ausnehmungen 10 aufweisen und mit diesen in der vorstehend beschriebenen Weise an den Anschlüssen 9 durch Verspannen mit den Transportelementgehäusen 5 verbunden sind, sowie mit einem vorzugsweise ebenfalls von einem Rohrstück gebildeten mittleren Abschnitt 8.2, der in geeigneter Weise mit seinen Enden mit den Endstücken 8.1 verbunden ist.

Bei entsprechender Anpassung der für die jeweilige Rohrverbindung bzw. für den jeweiligen Anschluss 9 notwendigen Elemente können auch die säulen- oder rohrartigen Transportelementgehäuse 5 zumindest im Bereich der Anschlüsse 9 eine von der Kreiszylinderform abweichende zylindrische Außen- oder Mantelfläche aufweisen.

### Bezugszeichenliste

- 1: Behältertransporteur
- 2: Behälter
- 3: Transportelement oder Transportstern
- 4: Transportrad
- 5: Transportelementgehäuse
- 6: Deckel
- 7: Stützfuß
- 8: Verbindungselement
- 8.1, 8.2: Abschnitte des Verbindungselementes 8
- 9: Anschluss
- 10: Ausnehmung
- 10.1: Rand
- 11: Spannbügel
- 12: Spannschraube
- 13: Distanzstück
- 14,15: Öffnung
- 16: Schraube
- 17: Öffnung
- 18: Leitung
- 19: Trenneinlage
- 20: Zentrierstift
- 21: Zentrieröffnung
- 22: Dichtung
- 23: Nut
- 24: Dichtung
- 25: Nut
- 26: Deckel
- A: Behältertransportrichtung

## Patentansprüche

1. Behältertransporteur zum Transportieren von Behältern (2), vorzugsweise zum hängenden Transportieren von Behältern (2), mit wenigstens einem Transportelement (3), das an einem säulen- oder rohrartigen Transportelementgehäuse (5) ein um eine Maschinenachse umlaufend antreibbares Transportrad (4) mit Behälteraufnahmen aufweist, wobei an dem Transportelementgehäuse (5) zu seiner Abstützung und zur Verbindung mit einem weiteren Transportelement und/oder mit einem Maschinengestell wenigstens ein seitlich wegstehendes rohrartiges Verbindungselement (8) an einem Anschluss (9) durch Verschrauben und/oder Verspannen befestigt ist, wobei das wenigstens eine rohrförmige Verbindungselement (8) zur Ausbildung des Anschlusses (9) an Wenigstens einem Ende eine Ausnehmung (10) aufweist, **dadurch gekennzeichnet, dass** das wenigstens eine rohrförmige Verbindungselement (8) mit der Ausnehmung (10) passend auf die Umfangsfläche des Transportelementgehäuses (5) und mit seiner Längserstreckung tangential oder im Wesentlichen tangential zu dieser Umfangsfläche orientiert seitlich aufgesetzt und mit dem Transportelementgehäuse (5) verspannt ist.

2. Behältertransporteur nach Anspruch 1, **dadurch gekennzeichnet, dass** das Transportelementgehäuse (5) zumindest im Bereich des Anschlusses (9) eine kreiszylinderförmige Außen- oder Mantelfläche aufweist und/oder von einem Rohrstück mit kreiszylinderförmiger Außen- oder Mantelfläche gebildet ist.

3. Behältertransporteur nach Anspruch 1 oder 2, **dadurch gekennzeichnet, dass** das rohrförmige Verbindungselement (8) mit dem Transportelementgehäuse (5) über einen das Transportelementgehäuse (5) umgreifenden Spannbügel (11) verspannt ist.

4. Behältertransporteur nach einem der vorhergehenden Ansprüche, **dadurch gekennzeichnet, dass** wenigstens zwei in einer Behältertransportrichtung (A) auf einander folgende Transportelement (8) vorgesehen sind, die jeweils an einem säulen- oder rohrartigen Transportelementgehäuse (5) ein um eine Maschinenachse umlaufend antreibbares Transportrad (4) mit den Behälteraufnahmen aufweisen, und dass die Transportelementgehäuse (5) jeweils über wenigstens einen Anschluss (9) mit wenigsten einem Verbindungselement (8) verbunden sind, welches sich zwischen diesen Transportelementgehäusen (5) erstreckt und zur Ausbildung der Anschlüsse (9) mit wenigstens zwei Ausnehmungen (10) für die Aufnahme jeweils eines Transportelementgehäuses (5) versehen ist.

5. Behältertransporteur nach einem der vorhergehenden Ansprüche, **dadurch gekennzeichnet, dass** an dem jeweiligen Anschluss (9) zumindest eine die genaue Orientierung des Verbindungselementes (8) in Bezug auf das Transportelementgehäuse (5) definierende Stiftzuweisung, vorzugsweise in Form wenigstens eines in eine Zentrieröffnung (21) eingreifenden Zentrierstiftes (20) vorgesehen ist.

6. Behältertransporteur nach Anspruch 5, **dadurch gekennzeichnet, dass** der Zentrierstift (20) am Spannbügel (11) und die Zentrieröffnung (21) im Transportelementgehäuse (5) oder der Zentrierstift (20) an der Außenfläche des Transportelementgehäuses (5) und die Zentrieröffnung (21) im Spannbügel (11) vorgesehen sind.

7. Behältertransporteur nach einem der vorhergehenden Ansprüche, **gekennzeichnet durch** Spannschrauben (12) für den jeweiligen Spannbügel (11), wobei die Spannschrauben (12) jeweils durch Öffnungen (14) im Verbindungselement (8) im Gewinde eines im Inneren des Verbindungselementes (8) vorgesehenen Muttergewindestückes eingreifen, und wobei das jeweilige Muttergewindestück vorzugsweise von einem im Inneren des Verbindungselementes (8) angeordneten Distanzstückes (13) gebildet ist, welches an seinem der Spannschraube (12) entfernt liegenden Ende ebenfalls mit dem Verbindungselement (8) verbunden ist.

8. Behältertransporteur nach einem der vorhergehenden Ansprüche, **dadurch gekennzeichnet, dass** das jeweilige Transportelementgehäuse (5) im Bereich des Anschlusses (9) jeweils wenigstens eine Öffnung (17) aufweist, über die der Innenraum des Transportelementgehäuses (5) mit dem Inneren des angeschlossenen Verbindungselementes (8) in Verbindung steht, beispielsweise zum Zuführen von Leitungen und/oder Kabeln (18) über das wenigstens eine Verbindungselement (8) an das wenigstens eine Transportelement (3) oder dessen Transportelementgehäuse (5).

9. Behältertransporteur nach einem der vorhergehenden Ansprüche, **dadurch gekennzeichnet, dass** in dem wenigstens einen Verbindungselement (8) zumindest eine Trenneinlage (19) vorgesehen ist, die sich zwischen den Anschlüssen (9) erstreckt.

10. Behältertransporteur nach einem der vorhergehenden Ansprüche, **dadurch gekennzeichnet, dass** die Anzahl der in Behältertransportrichtung (A) aneinander anschließenden Transportelemente (3) größer als Zwei ist.

11. Behältertransporteur nach einem der vorhergehenden Ansprüche, **dadurch gekennzeichnet, dass** mit dem Transportelementgehäuse (5) wenigstens eines Transportelementes (3) über jeweils einen Anschluss (9) wenigstens zwei Verbindungselemente (8) verbunden sind, und dass die Anschlüsse (9) in Richtung der Maschinenachse dieses Transportelementes (3) gegeneinander versetzt und bevorzugt so ausgeführt sind, dass die Längserstreckungen der Verbindungselemente (8) zumindest in ihrer Projektion auf eine horizontale Ebene einen Winkel miteinander einschließen.

12. Behältertransporteur nach einem der vorhergehenden Ansprüche, **dadurch gekennzeichnet, dass** die die Verbindungselemente (8) bildenden Rohrstücke an ihren Enden jeweils durch einen Deckel (26) dicht verschlossen sind.

13. Behältertransporteur nach einem der vorhergehenden Ansprüche, **gekennzeichnet durch** Dichtungen (22) zum Abdichten des jeweiligen Anschlusses (9) im Bereich der Ausnehmung (10) des Verbindungselementes (8) und/oder durch Dichtungen (24) zum Abdichten des jeweiligen Anschlusses (9) im Bereich des Zentrierstiftes (20) und der Zentrieröffnung, wobei die Dichtung zum Abdichten des Zentrierstiftes (20) und der Zentrieröffnung (21) bevorzugt so ausgeführt ist, dass sie beim Herstellen des Anschlusses (9), d.h. beim Verspannen des Verbindungselementes (8) mit dem jeweiligen Transportelementgehäuse (5) von dem Zentrierstift (20) perforiert wird.

14. Behältertransporteur nach einem der vorhergehenden Ansprüche, **dadurch gekennzeichnet, dass** das wenigstens eine Verbindungselement (8) einstückig oder mehrteilig, beispielsweise mit zwei jeweils eine der Ausnehmungen (10) aufweisenden rohrförmigen Endstücken (8.1) und einem diese Endstücke verbindenden, vorzugsweise rohrförmigen Zwischenstück (8.2).

15. Behältertransporteur nach einem der vorhergehenden Ansprüche, **gekennzeichnet durch** seine Ausbildung als Vortisch oder Behältereinlauf oder Behälterauslauf einer Behälterbehandlungsmaschine und/oder durch seine Ausbildung als Behältertransportstrecke mit wenigstens zwei in der Behältertransportrichtung (A) aneinander anschließenden Transportelementen (3), deren Transportelementgehäuse (5) durch wenigstens ein Verbindungselement (8) miteinander verbunden sind.

## Claims

1. Container conveyor for conveying containers (2), preferably for the suspended conveying of containers (2), with at least one conveying element (3) that comprises, on a columnar or tubular conveying element housing (5), an advancing wheel (4) which has container receptacles and can be driven so as to rotate about a machine axis, wherein, in order for the conveying element housing (5) to be supported and to be connected to another conveying element and/or to a machine frame, at least one laterally projecting tubular connecting element (8) is securely screwed and/or clamped to the conveying element housing by means of a connection (9), wherein the at least one tubular connecting element (8) comprises, at least at one end, in order to form the connection (9), a cut-out opening (10),
**characterised in that** the at least one connecting element (8) with the cut-out opening (10) is arranged laterally so as to fit onto the circumferential surface of the conveying element housing (5), and with its longitudinal extension is oriented tangentially or essentially tangentially to this circumferential surface, and is secured under tension to the conveying element housing (5).

2. Container conveyor according to claim 1, **characterised in that** the conveying element housing (5) comprises, at least in the region of the connection (9), a circular cylindrical outer or casing surface, and/or is formed by a tubular element with a circular cylindrical outer or casing surface.

3. Container conveyor according to claim 1 or 2, **characterised in that** the tubular connecting element (8) is connected under tension to the conveying element housing (5) by means of a clamping bar (11) engaging around the conveying element housing (5).

4. Container conveyor according to any one of the preceding claims, **characterised in that** at least two conveying elements (8) are provided, following one another in a container conveying direction (A), which in each case comprise, at a columnar or tubular conveying element housing (5), an advancing wheel (4), driven so as to rotate about a machine axis, with the container receptacles, and that the conveying element housings (5) are in each case connected by means of at least one connection (9) to a connecting element (8), which extends between these conveying element housings (5) and, in order to form the connections (9), is provided with at least two cut-out openings (10) to receive in each case one conveying element housing (5).

5. Container conveyor according to any one of the preceding claims, **characterised in that**, at the respective connection (9), at least one pin guide is provided, which defines the precise orientation of the connecting element (8) in relation to the conveying element housing (5), preferably in the form of at least one centring pin (20) engaging into a centring opening (21).

6. Container conveyor according to claim 5, **characterised in that** the centring pin (20) is provided at the clamping bar (11) and the centring opening (21) is provided in the conveying element housing (5), or the centring pin (20) is provided on the outer surface of the conveying element housing (5) and the centring opening (21) is provided in the clamping bar (11).

7. Container conveyor according to any one of the preceding claims, **characterised by** clamping screws (12) for the respective clamping bar (11), wherein the clamping screws (12) engage in each case through openings (14) in the connecting element (8) into the thread of a nut threaded element provided in the interior of the connecting element (8), and wherein the respective nut threaded element is formed preferably in the interior of the spacer element (13) arranged in the interior of the connecting element (8), which is likewise connected to the connecting element (8) at its end located remotely away from the clamping screw (12).

8. Container conveyor according to any one of the preceding claims, **characterised in that** the respective conveying element housing (5) in each case comprises, in the region of the connection (9), at least one opening (17), by means of which the interior of the conveying element housing (5) is in connection with the interior of the connected connecting element (8), for example for the laying of lines and/or cables (18) over the at least one connecting element (8) to the at least one conveying element (3) or its conveying element housing (5).

9. Container conveyor according to any one of the preceding claims, **characterised in that** in the at least one connecting element (8) at least one separation insert piece (19) is provided, which extends between the connections (9).

10. Container conveyor according to any one of the preceding claims, **characterised in that** the number of the conveying elements (3) connecting to one another in the container conveying direction (A) is greater than two.

11. Container conveyor according to any one of the preceding claims, **characterised in that** at least two connecting elements (8) are connected to the conveying element housing (5) of at least one conveying element (3) in each case by means of a connection (9), and that the connections (9) are offset in relation to one another in the direction of the machine axis of this conveying element (3), and are preferably configured such that the longitudinal extensions of the connecting elements (8) enclose an angle to one another at least in their projection onto a horizontal plane.

12. Container conveyor according to any one of the preceding claims, **characterised in that** the tubular elements forming the connecting elements (8) are tightly closed at their ends in each case by a cover (26).

13. Container conveyor according to any one of the preceding claims, **characterised by** seals (22) for sealing connection (9) in the region of the cut-out opening (10) of the connecting element (8), and/or by seals (24) for sealing the respective connection (9) in the region of the centring pin (20) and of the centring opening, wherein the seal for sealing the centring pin (20) and the centring opening (21) is preferably configured in such a way that, when the connection (9) is established, i.e. at the clamping of the connecting element (8) to the respective conveying element housing (5), it is perforated by the centring pin (20).

14. Container conveyor according to any one of the preceding claims, **characterised in that** the at least one connecting element (8) is integral or multi-piece, for example with two tubular end pieces (8.1) in each case comprising the cut-out openings (10), and with a preferably tubular intermediate piece (8.2) connecting these end pieces.

15. Container conveyor according to any one of the preceding claims, **characterised by** its configuration as a front table or container inlet or container outlet of a container treatment machine, and/or by its configuration as a container conveying segment with at least two conveying elements (3), connecting to one another in the container conveying direction (A), of which the conveying element housing (5) are connected to one another by at least one connecting element (8).

## Revendications

1. Transporteur de récipients pour le transport de récipients (2), de préférence pour le transport suspendu de récipients (2), avec au moins un élément de transport (3), qui présente, au niveau d'un boîtier d'élément de transport (5) de type colonne ou tube, une roue de transport (4) pouvant être entraînée en rotation autour d'un axe de machine avec des logements de récipient, dans lequel au moins un élément de liaison (8) de type tube en saillie latérale est fixé au niveau d'un raccord (9) par vissage et/ou serrage au niveau du boîtier d'élément de transport (5) pour son support et pour la liaison à un autre élément de transport et/ou à un bâti de machine, dans lequel l'au moins un élément de liaison tubulaire (8) présente pour la formation du raccord (9) au niveau d'au moins une extrémité un évidement (10), **caractérisé en ce que** l'au moins un élément de liaison tubulaire (8) est mis en place avec l'évidement (10) de manière adaptée sur la surface circonférentielle du boîtier d'élément de transport (5) et avec son extension longitudinale tangentiellement ou sensiblement tangentiellement à cette surface circonférentielle de manière orientée latéralement et est serré avec le boîtier d'élément de transport (5).

2. Transporteur de récipients selon la revendication 1, **caractérisé en ce que** le boîtier d'élément de transport (5) présente au moins dans la zone du raccord (9) une surface extérieure ou d'enveloppe cylindrique circulaire et/ou est formé par une pièce tubulaire avec surface extérieure ou d'enveloppe cylindrique circulaire.

3. Transporteur de récipients selon la revendication 1 ou 2, **caractérisé en ce que** l'élément de liaison tubulaire (8) est serré avec le boîtier d'élément de transport (5) par le biais d'un étrier de serrage (11) entourant le boîtier d'élément de transport (5).

4. Transporteur de récipients selon l'une quelconque des revendications précédentes, **caractérisé en ce qu'**au moins deux éléments de transport (8) successifs dans une direction de transport de récipients (A) sont prévus, qui présentent respectivement au niveau d'un boîtier d'élément de transport de type colonne ou tube (5), une roue de transport (4) pouvant être entraînée en rotation autour d'un axe de machine avec les logements de récipient, et que les boîtiers d'élément de transport (5) sont reliés respectivement par le biais d'au moins un raccord (9) à au moins un élément de liaison (8), lequel s'étend entre ces boîtiers d'élément de transport (5) et est doté, pour la réalisation des raccords (9), d'au moins deux évidements (10) pour la réception de respectivement un boîtier d'élément de transport (5).

5. Transporteur de récipients selon l'une quelconque des revendications précédentes, **caractérisé en ce qu'**au moins une affectation de broche définissant l'orientation exacte de l'élément de liaison (8) par rapport au boîtier d'élément de transport (5), de préférence sous la forme d'au moins une broche de centrage (20) venant en prise dans une ouverture de centrage (21), est prévue au niveau du raccord (9) concerné.

6. Transporteur de récipients selon la revendication 5, **caractérisé en ce que** la broche de centrage (20) est prévue au niveau de l'étrier de serrage (11) et l'ouverture de centrage (21) est prévue dans le boîtier d'élément de transport (5) ou la broche de centrage (20) est prévue au niveau de la surface extérieure du boîtier d'élément de transport (5) et l'ouverture de centrage (21) est prévue dans l'étrier de serrage (11).

7. Transporteur de récipients selon l'une quelconque des revendications précédentes, **caractérisé par** des vis de serrage (12) pour l'étrier de serrage (11) concerné, dans lequel les vis de serrage (12) viennent en prise respectivement par des ouvertures (14) dans l'élément de liaison (8) dans le filetage d'un élément de filetage intérieur prévu à l'intérieur de l'élément de liaison (8), et dans lequel l'élément de filetage intérieur concerné est formé de préférence par un écarteur (13) agencé à l'intérieur de l'élément de liaison (8), lequel est également relié à l'élément de liaison (8) au niveau de son extrémité éloignée de la vis de serrage (12).

8. Transporteur de récipients selon l'une quelconque des revendications précédentes, **caractérisé en ce que** le boîtier d'élément de transport (5) concerné présente dans la zone du raccord (9) respectivement au moins une ouverture (17), par le biais de laquelle l'espace intérieur du boîtier d'élément de transport (5) communique avec l'intérieur de l'élément de liaison (8) raccordé, par exemple pour l'amenée de conduites et/ou de câbles (18) par le biais de l'au moins un élément de liaison (8) au niveau de l'au moins un élément de transport (3) ou de son boîtier d'élément de transport (5).

9. Transporteur de récipients selon l'une quelconque des revendications précédentes, **caractérisé en ce qu'**au moins un insert de séparation (19), qui s'étend entre les raccords (9), est prévu dans l'au moins un élément de liaison (8).

10. Transporteur de récipients selon l'une quelconque des revendications précédentes, **caractérisé en ce que** le nombre d'éléments de transport (3) se raccordant l'un à l'autre dans la direction de transport de récipients (A) est supérieur à deux.

11. Transporteur de récipients selon l'une quelconque des revendications précédentes, **caractérisé en ce qu'**au moins deux éléments de liaison (8) sont reliés au boîtier d'élément de transport (5) d'au moins un élément de transport (3) par le biais de respectivement un raccord (9), et que les raccords (9) sont décalés l'un par rapport à l'autre en direction de l'axe de machine de cet élément de transport (3) et sont réalisés de préférence de sorte que les extensions longitudinales des éléments de liaison (8) forment un angle l'un avec l'autre au moins dans leur projection sur un plan horizontal.

12. Transporteur de récipients selon l'une quelconque des revendications précédentes, **caractérisé en ce que** les pièces tubulaires formant les éléments de liaison (8) sont fermées de manière étanche au niveau de leurs extrémités respectivement par un couvercle (26).

13. Transporteur de récipients selon l'une quelconque des revendications précédentes, **caractérisé par** des joints (22) pour l'étanchéification du raccord (9) concerné dans la zone de l'évidement (10) de l'élément de liaison (8) et/ou par des joints (24) pour l'étanchéification du raccord (9) concerné dans la zone de la broche de centrage (20) et de l'ouverture de centrage, dans lequel le joint pour l'étanchéification de la broche de centrage (20) et de l'ouverture de centrage (21) est réalisé de préférence de sorte qu'il est perforé par la broche de centrage (20) lors de l'établissement du raccord (9), autrement dit lors du serrage de l'élément de liaison (8) avec le boîtier d'élément de transport (5) concerné.

14. Transporteur de récipients selon l'une quelconque des revendications précédentes, **caractérisé en ce que** l'au moins un élément de liaison (8) d'un seul tenant ou en plusieurs parties, par exemple avec deux pièces d'extrémité tubulaires (8.1) présentant respectivement un des évidements (10) et une pièce intermédiaire (8.2), de préférence tubulaire, reliant ces pièces d'extrémité.

15. Transporteur de récipients selon l'une quelconque des revendications précédentes, **caractérisé par** sa réalisation en tant que prétable ou entrée de récipients ou sortie de récipients d'une machine de traitement de récipients et/ou par sa réalisation en tant que tronçon de transport de récipients avec au moins deux éléments de transport (3) se raccordant l'un à l'autre dans la direction de transport de récipients (A), dont les boîtiers d'éléments de transport (5) sont reliés l'un à l'autre par au moins un élément de liaison (8).
